# EUROPÄISCHE PATENTSCHRIFT

(11) **EP 4 017 715 B1**
(45) Veröffentlichungstag und Bekanntmachung des Hinweises auf die Patenterteilung: **07.08.2024**
(21) Anmeldenummer: 20760430.7
(22) Anmeldetag: 19.08.2020
(51) Int. Cl.: B29C 73/10, B29C 73/02, B29C 73/30

(54) **VERFAHREN ZUR INSTANDSETZUNG VON STRUKTURIERTEN OBERFLÄCHEN**
METHOD FOR REPAIRING STRUCTURED SURFACES
MÉTHODE POUR LA RÉPARATION DES SURFACES STRUCTURÉES

(30) Priorität: 22.08.2019 DE 102019122639
(43) Veröffentlichungstag der Anmeldung: 29.06.2022
(73) Patentinhaber: Lufthansa Technik AG, 22335 Hamburg (DE)
(72) Erfinder: REIFFERSCHEID, Moritz, 21483 Basedow (DE); HUBER, Heinrich, 85416 Langenbach (DE)
(74) Vertreter: Glawe, Delfs, Moll
(86) Internationale Anmeldenummer: PCT/EP2020/073170
(87) Internationale Veröffentlichungsnummer: WO 2021/032771

(56) Entgegenhaltungen:
- EP-A1- 1 683 627
- DE-A1- 102017 100 509
- JP-A- 2006 001 125
- US-A- 5 246 642

## Beschreibung

Die Erfindung betrifft ein Verfahren zur Instandsetzung von strukturierten Oberflächen eines Bauteils.

Bei industriell hergestellten Bauteilen können solche Oberflächen, die im Verwendungszustand einem Nutzer zugewandt sind, oberflächlich strukturiert sein, um so dem Nutzer einen gewünschten optischen und/oder haptischen Eindruck zu vermitteln. Insbesondere ist es möglich, durch strukturierte Oberflächen zusammen mit geeigneter Farbgebung den Eindruck eines anderen Materials als das tatsächlich für das Bauteil verwendete Material zu erzeugen. So lassen sich bspw. Holz- oder Steinoberflächen durch Kunststoffe besonders naturgetreu nachempfinden, wenn die Holzmaserung bzw. die Steinrauheit auf der Oberfläche des Bauteils nachgebildet ist. Beispiele für entsprechende Bauteile mit strukturierten Oberflächen sind sog. Designfußbodenbeläge aus Polyvinylchlorid (PVC), die Stein-, Fließen- oder Holzoptik aufweisen können, Küchenarbeitsplatten aus Kunstharz mit Steinoptik oder Kunststofffurniere, wie sie bei Bauteilen für die Innenausstattung von Flugzeugen verwendet werden, die eine Holzoptik mitsamt entsprechender Maserung aufweisen.

Kommt es zu Beschädigungen der strukturierten Oberflächen eines Bauteils, bei dem ein Teil der strukturierten Oberfläche ausgelöst ist, bspw. aufgrund eines Abplatzens der Oberflächenschicht infolge eines Stoßes, besteht regelmäßig der Wunsch, die Oberfläche des Bauteils wieder so instand zu setzen, dass keine oder nur eine geringe Restsichtbarkeit der reparierten Stelle vorhanden ist. Dies gilt insbesondere für solche Bauteiloberflächen, bei denen ein Austausch des gesamten Bauteils nicht oder nur sehr aufwendig möglich ist.

Eine Instandsetzung strukturierter Oberflächen mit einer geringen Restsichtbarkeit im derzeitigen Stand der Technik ist praktisch nur in sehr aufwendiger, handwerklich anspruchsvoller Handarbeit möglich, die folglich sehr kostenintensiv ist.

Das Dokument US5246642 A1 stellt den nächstliegenden Stand der Technik dar und offenbart ein Verfahren zur Reparatur von strukturierten Oberflächen, insbesondere von Fiberglas-Schiffshüllen.

Die im Stand der Technik ebenfalls angewandten Prägetechnik, bei der ein in die Fehlstelle einer Oberfläche eingefülltes Material mithilfe eines Prägestempels mit einer Oberflächenstrukturierung versehen und während der Anlage des Prägestempels ausgehärtet wird, eignet sich - wenn überhaupt - nur für richtungsunabhängig, kleinteilige, zufällige Oberflächenstrukturen. Insbesondere bei richtungsabhängigen Oberflächenstrukturen - wie bspw. der Imitation einer Holzmaserung - treten jedoch regelmäßig Fehlprägungen auf, sodass die so reparierte Fehlstelle dauerhaft und deutlich sichtbar bleibt. Außerdem

sind die für ein solches Reparaturverfahren verwendbaren Materialien nicht für jeden Anwendungszweck geeignet, da sie bspw. nicht ausreichend thermobeständig sind oder die Brandschutzanforderungen nicht erfüllen.

Aufgabe der vorliegenden Erfindung ist es ein Verfahren zur Instandsetzung von strukturierten Oberflächen eines Bauteils zu schaffen, bei dem die Nachteile aus dem Stand der Technik nicht mehr oder nur noch im verminderten Umfang auftreten. Gelöst wird diese Aufgabe durch ein Verfahren gemäß dem Hauptanspruch. Vorteilhafte Weiterbildungen sind Gegenstand der abhängigen Ansprüche.

Demnach betrifft die Erfindung ein Verfahren zur Instandsetzung von strukturierten Oberflächen eines Bauteils mit einer Schadstelle umfassend eine Materialauslösung in einer Teilfläche der Oberfläche, mit den Schritten:
a) Ermitteln einer Vergleichsfläche zur Teilfläche mit wenigstens vergleichbarer Oberflächenstruktur;
b) Aufbringen von aushärtbarem und wenigstens im ausgehärteten Zustand transparenten Matrizenmaterial auf die Vergleichsfläche;
c) Während das Matrizenmaterial an die Vergleichsfläche mit einem Anpressdruck angedrückt wird: Aushärten des Matrizenmaterials zu einer von der Vergleichsfläche rückstandsfrei ablösbaren, transparenten Matrize mit der Negativform der Oberflächenstruktur der Vergleichsfläche;
d) Auffüllen der Schadstelle der Teilfläche mit elektromagnetischer Bestrahlung aushärtbarem Material;
e) Auflegen der Matrize auf das aushärtbare Material in der Schadstelle in einer Ausrichtung der Negativform der transparenten Matrize entsprechend der gewünschten Oberflächenstruktur an der Schadstelle;
f) Während die Matrize auf die Schadstelle mit einem Anpressdruck angedrückt wird: Bestrahlen des aushärtbarem Materials mit elektromagnetischer Bestrahlung durch die transparente Matrize bis das Material ausgehärtet ist; und
g) Rückstandsfreies Entfernen der Matrize von dem ausgehärteten Material an der Schadstelle.

Das erfindungsgemäße Verfahren ermöglicht die Instandsetzung von strukturierten Oberflächen eines Bauteils, bei der ein Teil des die Oberfläche des Bauteils bildenden Materials ausgelöst ist. Bei einer entsprechenden Schadstelle kann es sich bspw. um Abplatzung, Stoßbeschädigungen oder tiefe Kratzer handeln. Es hat sich gezeigt, dass eine gemäß dem erfindungsgemäßen Verfahren reparierten Schadstelle im Hinblick auf die Oberflächenstruktur regelmäßig kaum sichtbar ist und die auch bei Bedarf erhöhten Anforderungen, bspw. hinsichtlich thermischer oder mechanischer Belastungen oder dem Brandschutz, gerecht werden kann. Beide Vorteile lassen sich durch die erfindungsgemäß vorgesehene Verwendung einer transparenten Matrize zur Ausformung der Struktur auf der Oberfläche im Bereich der Schadstelle realisieren: Aufgrund der Transparenz der Matrize kann diese zum einen bei ihrer Verwendung genau ausgerichtet werden, sodass Fehlprägungen effektiv vermieden werden können, zum anderen ist es aufgrund der Transparenz möglich, mit elektromagnetischer Bestrahlung aushärtbares Material zur Auffüllung der Schadstelle zu verwenden, welches durch die Matrize hindurch zum Aushärten geeignet bestrahlt werden kann.

Um die Restsichtbarkeit einer instandgesetzten Schadstelle bestmöglich zu reduzieren, ist erfindungsgemäß außerdem vorgesehen, die für die spätere Instandsetzung verwendete Matrize für die instand zu setzende Schadstelle anhand einer Vergleichsfläche - also einer Fläche, die auch in Hinblick auf die Oberflächenstruktur der Teilfläche mit der Schadstelle vergleichbar, vorzugsweise identisch ist - erstellt wird, um so eine bestmögliche Anpassung der Oberflächenstruktur im Bereich der Schadstelle zu erreichen. Die Vergleichsfläche kann dabei auf demselben Bauteil zu finden sein, an dem sich auch die instand zu setzende Schadstelle befindet. Dies gilt insbesondere für sich wiederholende Oberflächenstrukturen. Alternativ ist es auch möglich, die Vergleichsfläche auf einem beschädigungsfreien Bauteil aufzufinden, welches zu dem instand zu setzenden Bauteil identisch ist. In diesem Fall kann die Vergleichsfläche auf dem beschädigungsfreien Bauteil identisch zur die Schadstelle aufweisenden Teilfläche gewählt werden. In andere Worten kann die Matrize also an genau der Stelle des beschädigungsfreien Bauteils hergestellt werden, an der sich bei dem instand zu setzenden Bauteil die Schadstelle wiederfindet. Insbesondere bei industriell in Serie hergestellten Bauteilen ist eine solche Vorgehensweise möglich.

Nach dem Ermitteln einer geeigneten Vergleichsfläche wird aushärtbares und wenigstens im ausgehärteten Zustand transparentes Matrizenmaterial auf die gesamte Vergleichsfläche aufgebracht. Bspw. kann es sich beim Matrizenmaterial um transparentes Harz handeln. Bei dem Harz kann es sich bspw. um ein Epoxid-Harz, ein Acryl-Harz oder ein Polyurethan-Harz handeln. Wesentlich ist lediglich, dass das Harz im ausgehärteten Zustand transparent und außerdem ausreichen formstabil ist, um später formgebend für das aushärtbare Material zu sein. Um das spätere rückstandsfreie Ablösen der ausgehärteten Matrize sicher zu gewährleisten, kann bei Bedarf vor dem Aufbringen des Matrizenmaterials ein geeignetes Trennmittel auf die Vergleichsfläche aufgebracht werden.

Das aushärtbare Matrizenmaterial wird dann mit einem vorgegebenen oder frei gewählten Anpressdruck an die Vergleichsfläche angedrückt und dann ausgehärtet. Das Aushärten kann in Abhängigkeit der Materialeigenschaften des Matrizenmaterials erfolgen und bei Bedarf bspw. thermisch oder durch elektromagnetische Bestrahlung, z. B. durch (UV-)Licht, angeregt werden. Auch ist möglich, dass das Matrizenmaterial aufgrund einer chemischen Reaktion, bspw. von zwei kurz vor Anwendung vermischten Komponenten, aushärtet.

Nach erfolgtem Aushärten liegt eine rückstandsfrei ablösbare, transparente Matrize mit der Negativform der Oberflächenstruktur der Vergleichsfläche vor.

Nach oder parallel zur Erstellung der transparenten Matrize wird die eigentliche Schadstelle in der Teilfläche des instand zu setzenden Bauteils mit Material aufgefüllt, welches durch elektromagnetische Strahlung, also insbesondere sichtbares Licht oder UV-Strahlung, ausgehärtet werden kann. Dabei kann die Schadstelle vor dem Auffüllen mit aushärtbarem Material bei Bedarf vergrößert werden, um die Kontaktfläche zwischen dem fraglichen Material und dem Bauteil zu vergrößern. Auch ist es möglich, bei Bedarf einen Hinterschnitt einzubringen, sodass die spätere Verbindung zwischen dem Material und dem Bauteil nicht nur einen Stoffschluss, sondern auch einen Formschluss umfasst.

Bei dem aushärtbaren Material kann es sich bevorzugt um Harz, bspw. auf Basis von Epoxid, Acrylat oder Polyurethane, handeln. Das Harz kann dabei so gewählt werden, dass es im ausgehärteten Zustand die gewünschten oder vorgeschriebenen Eigenschaften, bspw. hinsichtlich thermischer oder mechanischer Belastungen oder dem Brandschutz, aufweist. Selbstverständlich ist bevorzugt, dass der Farbton des aushärtbaren Materials entsprechend dem Farbton der Oberfläche an der Schadstelle gewählt ist. Dabei ist insbesondere der Farbton des Materials im ausgehärteten Zustand relevant, um eine möglichst geringe Restsichtbarkeit der instandgesetzten Schadstelle zu erreichen.

Nach Auffüllen der Schadstelle der Teilfläche mit elektromagnetischer Bestrahlung aushärtbarem Material wird anschließend die zuvor erstellte Matrize auf das aushärtbare Material in der Schadstelle in einer Ausrichtung der Negativform der transparenten Matrize entsprechend der gewünschten Oberflächenstruktur an der Schadstelle aufgelegt. Da die Matrize gemäß dem erfindungsgemäßen Verfahren transparent ist, kann die korrekte Ausrichtung der Matrize unmittelbar überprüft werden.

Die korrekte Ausrichtung in allen drei Achsen ist dabei wesentlich, um die Restsichtbarkeit einer instandgesetzten Schadstelle soweit wie möglich zu reduzieren.

Die Matrize wird dann auf die Schadstelle mit einem Anpressdruck angedrückt. Dabei ist Anpressdruck vorzugsweise gleich dem Anpressdruck beim Aushärten des Matrizenmaterials zur Erstellung der Matrize. Zum Anpressen kann bspw. auf den Anpressstempel, der bereits beim Aushärten des Matrizenmaterials verwendet wurde, zurückgegriffen werden.

Ist die Matrize in ihrem Umriss nicht an den Umriss der Schadstelle, bspw. durch entsprechende Nachbearbeitung, angepasst, sodass ggf. überschüssiges aushärtbares Material aus der Schadstelle seitlich an der Matrize vorbei austreten kann, kann die Schadstelle und/oder die Matrize mit einem Auslass für überschüssiges aushärtbares Material versehen werden. Indem ggf. überschüssiges Material austreten kann, ist gewährleistet, dass die spätere Oberfläche im Bereich der Schadstelle mit der umliegenden Teilfläche bündig ist.

Um zu vermeiden, dass evtl. austretendes Material auf der die Schadstelle umgebenden Teilfläche anhaftet, kann vor Auffüllen der Schadstelle mit aushärtbarem Material die Teilfläche um die Schadstelle mit einem Trennmittel versehen werden.

Wird die Matrize wie beschrieben in der zuvor überprüften Lage an das aushärtbare Material angedrückt, kann es durch die transparente Matrize hindurch elektromagnetisch, bspw. mit Licht im sichtbaren und/oder UV-Bereich, in einer für das Aushärten geeigneten Wellenlänge bestrahlt werden, bis es vollständig ausgehärtet ist.

Wird anschließend die Matrize von dem ausgehärteten Material an der Schadstelle rückstandsfrei entfernt, ist die Instandsetzung der strukturierten Oberfläche in vielen Fällen bereits vollständig abgeschlossen. Lediglich in Fällen, in denen bspw. ein besonderer Oberflächenglanz erforderlich ist, um die Restsichtbarkeit weiter zu reduzieren, kann das ausgehärtete Material nach Entfernen der Matrize bei Bedarf mit einem Überzugslack nachbearbeitet werden.

Es hat sich gezeigt, dass mit dem erfindungsgemäßen Verfahren strukturierten Oberflächen eines Bauteils mit einer Schadstelle umfassend eine Materialauslösung in einer Teilfläche der Oberfläche effizient und kostengünstig instand gesetzt werden können, ohne dass die reparierte Schadstelle im Nachhinein noch unmittelbar erkennbar ist.

Die Erfindung wird nun anhand eines Ausführungsbeispiels unter Bezugnahme auf die beigefügten Zeichnungen beispielhaft beschrieben. Es zeigen:

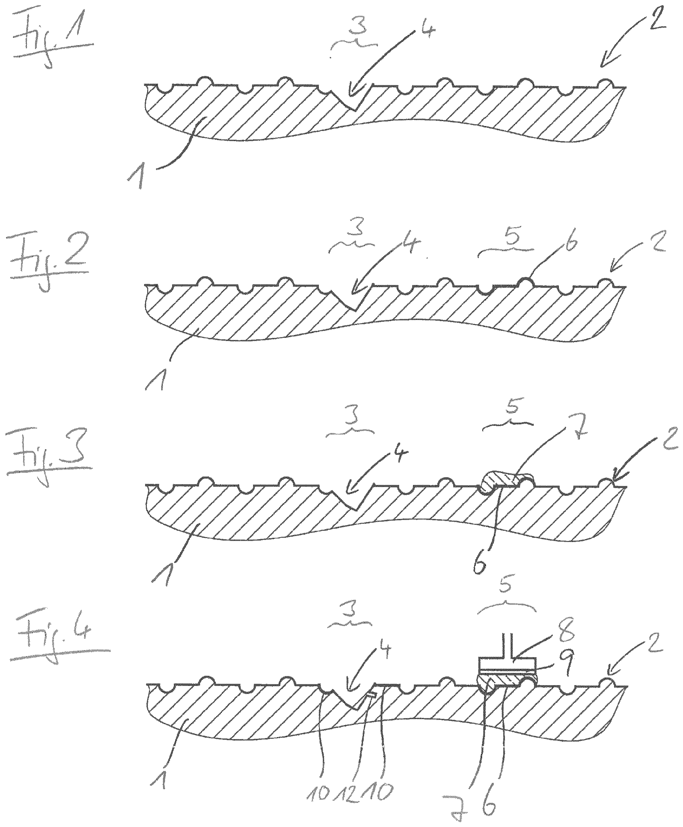

- Figuren 1-8:: schematische Darstellung einzelner Zwischenschritte des erfindungsgemäßen Verfahrens.

In Figuren 1 bis 8 sind exemplarisch einzelne Schritte des erfindungsgemäßen Verfahrens anhand einer im Schnitt dargestellten Oberfläche 2 eines Bauteils 1 gezeigt. Die Oberfläche 2 des Bauteils 1 ist strukturiert und weist sowohl Vertiefungen als auch Erhebungen auf.

Im in Figur 1 gezeigten Ausgangszustand befindet sich in einer Teilfläche 3 der Oberfläche 2 eine Schadstelle 4, in der aufgrund eines Stoßes mit einem spitzen Gegenstand eine Materialauslösung vorliegt.

Um die strukturierte Oberfläche 2 wieder instand zu setzen, wird zunächst eine Vergleichsfläche 5 ermittelt, deren Oberflächenstruktur mit der Oberflächenstruktur der Teilfläche 3 im Original- und somit im wiederherzustellenden Zustand übereinstimmt. Im vorliegenden Beispiel befindet sich eine geeignete Vergleichsfläche 5 unmittelbar auf dem Bauteil 1, welches auch die Schadstelle 4 aufweist. Es ist aber auch möglich, dass eine Vergleichsfläche 5 auf einem zum Bauteil 1 identischen, jedoch nicht beschädigten Bauteil (nicht dargestellt) verwendet wird, wobei die Vergleichsfläche 5 an der zur Teilfläche 3 vergleichbaren Stelle auf dem identischen Bauteil gewählt werden kann.

Im Bereich der Vergleichsfläche 5 wird ein Trennmittel 6 aufgebracht, welches zu einem späteren Zeitpunkt wieder rückstandslos entfernt werden kann (Figur 2).

Anschließend wird im Bereich der Vergleichsfläche 5 ein durch Bestrahlung mit UV-Licht aushärtbares und im ausgehärteten Zustand transparentes Matrizenmaterial 7 aufgebracht (Figur 3), welches sich später im ausgehärteten Zustand rückstands- und zerstörungsfrei von der Oberfläche 2 ablösen lässt.

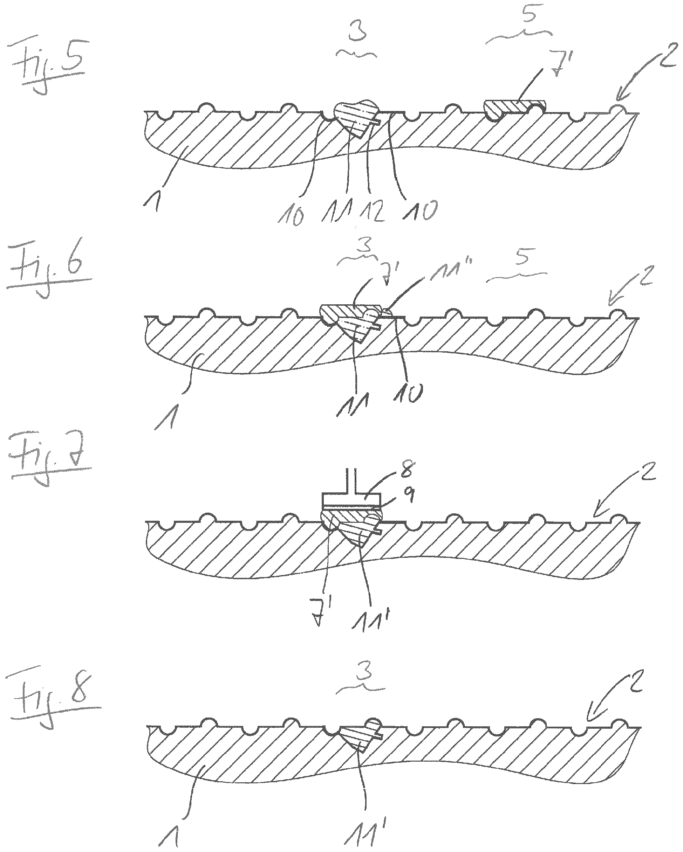

Zum Aushärten wird auf das Matrizenmaterial 7 mithilfe des Anpressstempels 8 ein Anpressdruck ausgeübt. An der dem Matrizenmaterial 7 zugewandten Fläche weist der Anpressstempel 8 dabei eine flächige (bspw. aus LED-Kacheln gebildete) UV-Lichtquelle 9 oder ein für eine innen liegende UV-Lichtquelle geeignetes Lichtaustrittsfenster auf. Während das Matrizenmaterial 7 also an die Oberfläche 2 angedrückt wird, erfolgt gleichzeitig eine elektromagnetische Bestrahlung mit UV-Licht, sodass das Matrizenmaterial 7 zu einer transparenten Matrize 7` erstarrt (vgl. Figur 5).

Parallel dazu wird die Schadstelle 4 zur Instandsetzung vorbereitet, indem - neben einer Reinigung der Schadstelle 4 - die Schadstelle 4 durch die Schaffung eines kleinen Querloches 12 bspw. durch Bohren derart vergrößert wird, dass ein Hinterschnitt entsteht, über den das die Schadstelle 4 letztendlich auffüllende Material nicht nur per Stoffschluss in der Schadstelle 4, sondern auch per Formschluss gesichert wird.

In dem Bereich der Teilfläche 3 um die eigentliche Schadstelle, wird erneut ein Trennmittel 10 aufgebracht, über welches verhindert werden soll, dass das nachfolgend in die Schadstelle 4 eingefüllte aushärtbare Material 11 in Bereichen der Oberfläche 2 anhaftet, die tatsächlich nicht beschädigt sind.

Wie in Figur 5 gezeigt, wird die Schadstelle 4 inkl. des Querloches 12 mit durch elektromagnetische Bestrahlung im UV-Bereich aushärtbarem Material 11 aufgefüllt. Das Material 11 - bspw. ein Epoxidharz - ist dabei so gewählt, dass es im ausgehärteten Zustand einen Farbton entsprechend dem Farbton der Oberfläche 2 annimmt.

Anschließend wird die zuvor hergestellte transparente Matrize 7' von der Vergleichsfläche 5 gelöst und auf das aushärtbare Material 11 aufgelegt. Aufgrund der Transparenz der Matrize 7` kann diese derart auf der Teilfläche 3 ausgerichtet werden, dass die Negativform der Vergleichsfläche 5 auf ihrer Unterseite dem Negativ der gewünschten späteren Form der Oberfläche 2 in der Teilfläche 3 entspricht (Figur 6). Dies ist wesentlich, damit die spätere Restsichtbarkeit der instandgesetzten Schadstelle 4 so gering wie möglich ist. Evtl. überschüssiges Material 11" kann dabei seitlich unter der Matrize 7` austreten und - aufgrund des Trennmittels 10 - rückstandsfrei entfernt werden.

Anschließend wird die Matrize 7' mit dem bereits zuvor verwendeten Anpressstempels 8 auf das Material 11 gedrückt (Figur 7), wodurch dieses an die Oberfläche in der Schadstelle 4 angedrückt wird. Dabei wird derselbe Anpressdruck auf die Matrize 7` ausgeübt, wie bei dem in Figur 4 gezeigten Schritt. Währenddessen wird das UV-aushärtbare Material 11' mithilfe von der UV-Lichtquelle 9 ausgehenden und durch die transparente Matrize 7` hindurchtretender elektromagnetischer Strahlung zu ausgehärtetem Material 11`.

Nach vollständigem Aushärten des Materials 11' kann der Anpressstempels 8 und die Matrize 7` entfernt werden und die Oberfläche 2 des Bauteils 1 ist in der Teilfläche 3 mit der ursprünglichen Schadstelle 4 instandgesetzt (Figur 8). Sofern erforderlich, kann das ausgehärtete Material 11' anschließend noch mit einem Überzugslack nachbearbeitet werden, um bspw. einen an die übrige Oberfläche 2 angepassten Glanz zu erreichen.

## Patentansprüche

1. Verfahren zur Instandsetzung von strukturierten Oberflächen (2) eines Bauteils (1) mit einer Schadstelle (4) umfassend eine Materialauslösung in einer Teilfläche (3) der Oberfläche (2), mit den Schritten:
a) Ermitteln einer Vergleichsfläche (5) zur Teilfläche (3) mit wenigstens vergleichbarer Oberflächenstruktur;
b) Aufbringen von aushärtbarem und wenigstens im ausgehärteten Zustand transparenten Matrizenmaterial (7) auf die Vergleichsfläche (5);
c) Während das Matrizenmaterial (7) an die Vergleichsfläche (5) mit einem Anpressdruck angedrückt wird: Aushärten des Matrizenmaterials (7) zu einer von der Vergleichsfläche (5) rückstandsfrei ablösbaren, transparenten Matrize (7') mit der Negativform der Oberflächenstruktur der Vergleichsfläche (5);
d) Auffüllen der Schadstelle (4) der Teilfläche (3) mit elektromagnetischer Bestrahlung aushärtbarem Material (11) ;
e) Auflegen der Matrize (7') auf das aushärtbare Material (11) in der Schadstelle (4) in einer Ausrichtung der Negativform der transparenten Matrize (7') entsprechend der gewünschten Oberflächenstruktur an der Schadstelle (4) ;
f) Während die Matrize (7') auf die Schadstelle (4) mit einem Anpressdruck angedrückt wird: Bestrahlen des aushärtbaren Materials (11) mit elektromagnetischer Bestrahlung durch die transparente Matrize (7') bis das Material (11) ausgehärtet ist; und
g) Rückstandsfreies Entfernen der Matrize (7') von dem ausgehärteten Material (11`) an der Schadstelle (4),
wobei der Anpressdruck in den Schritten c) und f) gleich ist.

2. Verfahren nach Anspruch 1,
**dadurch gekennzeichnet, dass**
die Vergleichsfläche (5) auf dem Bauteil (1) mit der instandzusetzenden Schadstelle (4) oder auf einem identischen, nicht beschädigtem Bauteil gewählt wird.

3. Verfahren nach einem der vorhergehenden Ansprüche,
**dadurch gekennzeichnet, dass**
die Schadstelle (4) und/oder die Matrize (7') mit einem Auslass für überschüssiges aushärtbares Material (11) versehen ist.

4. Verfahren nach einem der vorhergehenden Ansprüche,
**dadurch gekennzeichnet, dass**
die Schadstelle (4) vor Auffüllen mit aushärtbarem Material (11) durch Materialabtrag vergrößert wird.

5. Verfahren nach einem der vorhergehenden Ansprüche,
**dadurch gekennzeichnet, dass**
vor Auffüllen der Schadstelle (4) mit aushärtbarem Material (11) die Teilfläche (3) um die Schadstelle (4) mit einem Trennmittel (10) zur Vermeidung des Anhaften des aushärtbaren Materials (11) daran versehen wird.

6. Verfahren nach einem der vorhergehenden Ansprüche,
**dadurch gekennzeichnet, dass**
das aushärtbare Material (11) ein, vorzugsweise durch UV-Licht, aushärtbares Harz ist.

7. Verfahren nach einem der vorhergehenden Ansprüche,
**dadurch gekennzeichnet, dass**
der Farbton des aushärtbaren Materials (11) entsprechend dem Farbton der Oberfläche (2) an der Schadstelle (4) gewählt ist.

8. Verfahren nach einem der vorhergehenden Ansprüche,
**dadurch gekennzeichnet, dass**
das ausgehärtete Material (11`) nach Entfernen der Matrize (7') mit einem Überzugslack nachbearbeitet wird.

## Claims

1. Method for refurbishing structured surfaces (2) of a component (1) having a damage location (4) comprising material detachment in a subregion (3) of the surface (2), having the steps:
a) determining a reference region (5), having at least a similar surface structure, for the subregion (3);
b) applying a curable die material (7), which is transparent at least in the cured state, onto the reference region (5);
c) while the die material (7) is being pressed onto the reference region (5) with an application pressure: curing the die material (7) to form a transparent die (7') which can be separated from the reference region (5) without leaving residues and has the negative shape of the surface structure of the reference region (5);
d) filling the damage location (4) of the subregion (3) with material (11) that can be cured with electromagnetic irradiation;
e) placing the die (7') onto the curable material (11) in the damage location (4) with an alignment of the negative shape of the transparent die (7') corresponding to the desired surface structure at the damage location (4);
f) while the die (7') is being pressed onto the damage location (4) with an application pressure: irradiating the curable material (11) with electromagnetic irradiation through the transparent die (7') until the material (11) is cured; and
g) removing the die (7') from the cured material (11') at the damage location (4) without leaving residues,
wherein the application pressure is the same in steps c) and f).

2. Method according to Claim 1,
**characterized in that**
the reference region (5) is selected on the component (1) that has the damage location (4) to be refurbished or on an undamaged identical component.

3. Method according to one of the preceding claims, **characterized in that**
the damage location (4) and/or the die (7') is provided with an outlet for excess curable material (11).

4. Method according to one of the preceding claims, **characterized in that**
the damage location (4) is enlarged by material erosion before filling with curable material (11).

5. Method according to one of the preceding claims, **characterized in that**
before filling the damage location (4) with curable material (11), the subregion (3) around the damage location (4) is provided with a release agent (10) to prevent adhesion of the curable material (11) thereon.

6. Method according to one of the preceding claims, **characterized in that**
the curable material (11) is a curable resin that can preferably be cured by UV light.

7. Method according to one of the preceding claims, **characterized in that**
the hue of the curable material (11) is selected according to the hue of the surface (2) at the damage location (4).

8. Method according to one of the preceding claims, **characterized in that**
the cured material (11') is finished with a top coating after removal of the die (7').

## Revendications

1. Procédé permettant de remettre en état des surfaces structurées (2) d'un composant (1) présentant une zone endommagée (4), comprenant un détachement de matière dans une surface partielle (3) de la surface (2), comprenant les étapes consistant à :
a) déterminer une surface de comparaison (5) par rapport à la surface partielle (3) présentant au moins une structure de surface comparable ;
b) appliquer sur la surface de comparaison (5) un matériau de matrice (7) durcissable, transparent au moins à l'état durci ;
c) pendant que le matériau de matrice (7) est plaqué contre la surface de comparaison (5) avec une pression de contact : durcir le matériau de matrice (7) en une matrice transparente (7') détachable sans résidu de la surface de comparaison (5) et présentant la forme négative de la structure de surface de la surface de comparaison (5) ;
d) remplir la zone endommagée (4) de la surface partielle (3) avec un matériau (11) durcissable par rayonnement électromagnétique ;
e) placer la matrice (7') sur le matériau durcissable (11) dans la zone endommagée (4) dans un alignement de la forme négative de la matrice transparente (7') selon la structure de surface souhaitée dans la zone endommagée (4) ;
f) pendant que la matrice (7') est plaquée contre la zone endommagée (4) avec une pression de contact :
irradier le matériau durcissable (11) avec un rayonnement électromagnétique à travers la matrice transparente (7') jusqu'à ce que le matériau (11) ait durci ; et
g) retirer sans résidu la matrice (7') du matériau durci (11') dans la zone endommagée (4),
la pression de contact étant identique dans les étapes c) et f).

2. Procédé selon la revendication 1, **caractérisé en ce que** la surface de comparaison (5) est choisie sur le composant (1) présentant la zone endommagée (4) à remettre en état ou sur un composant identique, non endommagé.

3. Procédé selon l'une quelconque des revendications précédentes, **caractérisé en ce que** la zone endommagée (4) et/ou la matrice (7') est/sont munie(s) d'une sortie pour un surplus de matériau durcissable (11).

4. Procédé selon l'une quelconque des revendications précédentes, **caractérisé en ce que** la zone endommagée (4) est agrandie par enlèvement de matière avant le remplissage avec le matériau durcissable (11).

5. Procédé selon l'une quelconque des revendications précédentes, **caractérisé en ce qu'**avant le remplissage de la zone endommagée (4) avec le matériau durcissable (11), la surface partielle (3) autour de la zone endommagée (4) est munie d'un agent de séparation (10) pour éviter que le matériau durcissable (11) n'adhère à celle-ci.

6. Procédé selon l'une quelconque des revendications précédentes, **caractérisé en ce que** le matériau durcissable (11) est une résine durcissable de préférence à la lumière UV.

7. Procédé selon l'une quelconque des revendications précédentes, **caractérisé en ce que** la teinte du matériau durcissable (11) est choisie selon la teinte de la surface (2) au niveau de la zone endommagée (4).

8. Procédé selon l'une quelconque des revendications précédentes, **caractérisé en ce que** le matériau durci (11') est retouché avec un vernis de finition après le retrait de la matrice (7').
